# EUROPEAN PATENT APPLICATION

(11) **EP 3 086 588 A1**
(43) Date of publication of application: **26.10.2016**
(21) Application number: 14871520.4
(22) Date of filing: 01.07.2014
(51) Int. Cl.: H04W 16/10

(54) **CONFIGURATION PROCESSING AND CONFIGURATION METHOD AND DEVICE FOR BINDING LINK**

(30) Priority: 19.12.2013 CN 201310706052
(71) Applicant: ZTE Corporation, Guangdong Province 518057 (CN)
(72) Inventor: YUAN, Bo, Shenzhen Guangdong 518057 (CN); FAN, Liang, Shenzhen Guangdong 518057 (CN)
(74) Representative: Novagraaf Technologies
(86) International application number: PCT/CN2014/081420
(87) International publication number: WO 2015/090036

(57) **Abstract**

The disclosure provides a configuration processing and configuring method and device for a binding link. The configuration processing method includes that: device information about a service node in a network and/or access user information about an access link is received, wherein the access link is a link in a link binding group between the service node and a convergence device in the network; it is judged whether the device information and/or the access user information meets a preset condition; and when the device information and/or the access user information meets the preset condition, an adjustment instruction for adjusting a link configuration mode is sent to the convergence device. By means of the above technical solutions provided in the disclosure, the problems in the related art that the utilization rate of network resources is low and a link failure occurs easily in a resource sharing mode are solved. The flexible allocation on service node resources is realized, and at the same time, a better risk avoidance mechanism and service continuity assurance capability are provided, so that a solution for sharing service node resources is more adapted to the development demand of a broadband network.

## Description

### Technical Field

The disclosure relates to the field of mobile communication, and in particular to a method and device for configuration processing of a binding link and a method and device for configuring the binding link.

### Background

With a popularization of broadband networks, a rapid growth of Internet service types, a constant improvement of service quality, and a rapid growth of users' demands for bandwidth, broadband access networks of the telecom operators are under increasing load pressure, and a bandwidth expansion speed of the operators has not kept pace with a demand growth of broadband users. At the same time, because users' habits and work-and-rest time present diversity, a traditional expanding way based on the number of new users requires a huge cost and cannot meet network development requirements.

The development of broadband networks realizes effective use of resources by means of a wider range of resource sharing, but not blind physical bandwidth resources. In traditional broadband networks, a planning of network bandwidth realizes a cell-level and small-office-node bandwidth resource sharing based on the number of users, wherein the bandwidth resource include line bandwidth resource and service node bandwidth resource; from a network development speed, the line bandwidth resource is sufficient relative to the service node bandwidth resource; the service node bandwidth resource has met resource predicaments, and a representative problem is that most users cannot enjoy the maximum bandwidth committed by the operators during the afternoon peak hours; that is because most users gather in residential areas of a city, and a bandwidth resource utilization rate of service nodes in the residential areas is extremely high, but a utilization rate of service nodes in office areas is low, even the service nodes are in an idle state. On the contrary, a resource utilization rate of broadband network devices in the residential areas during working hours is far below that during the afternoon peak hours.

One of major problems the telecom operators around the world are facing is how to solve a problem of resource utilization rate of the broadband networks, and then make the most use of the existing network resources, reduce an expansion frequency, and reduce a network cost. In the field of broadband access, a main requirement is to improve the resource utilization rate of service nodes (i.e. a broadband access server, a service router, and so on). The mainstream technical solution in the industry is a solution of pooling and grouping the service nodes, which realizes a reasonable use of broadband resources in all-day and large-scale areas by means of a wider range of service node resource sharing, and realizes, with limited resources, resource complementarity of different areas during peak and off-peak hours and resource sharing of different types of users.

For a technical solution of pooling and grouping resources of the service nodes, first, it is needed to realize a resource sharing of user information and network information between different service nodes; a current mainstream solution is distributed negotiation between the service nodes, which realizes the complete information sharing between the service nodes for the Full Mesh mode. However, with an increasingly large scale of resource sharing, this mode inevitably brings problems of a large number of connections and difficulties in management. Adding and deleting a service node inevitably causes a configuration change of entire network, so there is a problem of difficulties in extensibility and management.

An effective solution has not been presented aiming at problems in the related art that an utilization rate of network resources is low and a link failure occurs easily in a resource sharing mode.

### Summary

The embodiments of disclosure provides a method and device for configuration processing of a binding link and a method and device for configuring the binding link, so as at least to solve the problems in the related art that the utilization rate of network resources is low and a link failure occurs easily in a resource sharing mode.

To complete above-mentioned aim, according to an embodiment of the disclosure, a method for configuration processing of a binding link is provided, including that: receiving device information about a service node in a network and/or access user information about an access link, wherein the access link is a link in a link binding group between the service node and a convergence device in the network; judging whether the device information and/or the access user information meets a preset condition; and when the device information and/or the access user information meets the preset condition, sending an adjustment instruction, which is used for adjusting a link configuration mode, to the convergence device.

In an example embodiment, judging whether the device information and/or the access user information meets the preset condition includes: judging whether the device information and/or the access user information meets at least one of the following conditions: a CPU utilization rate is greater than or equal to a threshold, a memory utilization rate is greater than or equal to a threshold, the number of users of the access link or a total user bandwidth is greater than or equal to a maximum threshold, the number of users of the access link or a total user bandwidth is less than or equal to a minimum threshold, an uplink is in fault, a downlink is in fault, and a line card is in fault; wherein, when at least one of the above conditions is met, it is determined that the link configuration mode needs to be adjusted.

In an example embodiment, the device information includes at least one of the followings: a CPU state, a memory state, an uplink state, an access link state, integrated load information, link load information, and a line card state.

In an example embodiment, the access user information includes at least one of the followings: the number of users of the access link, user authorization information, and user bandwidth information.

In an example embodiment, the adjustment instruction carries at least one of the following adjustment policies: stopping users of a specified access link from accessing, stopping new users of a specified access link from accessing, switching access users of a specified access link to another access link, adjusting an active-standby or load sharing priority of a specified access link, and adjusting a limit to the number of Media Access Control (MAC) addresses of a specified access link.

In an example embodiment, the method further includes: when switching the access users of the specified access link to the other access link, sending user information about the access users to a service node of the other access link.

In an example embodiment, wherein before receiving the device information about the service node in the network and/or the access user information about the access link, the method further includes: receiving a current link configuration mode from the convergence device.

In an example embodiment, the link configuration mode includes at least one of the followings: an active-standby mode of multiple access links and a load sharing mode of multiple access links.

In an example embodiment, the service node includes at least one of the followings: a Broadband Remote Access Server (BRAS), a Broadband Network Gateway (BNG), a Broadband Service Gateway (BSG), a Service Router (SR), a Broadband Access Server (BAS), an OpenFlow Logical Switch (OFLS), and an OpenFlow Switch (OFS).

In an example embodiment, the convergence device includes at least one of the followings: an Ethernet switch, a router, an OFLS, an OFS, an Optical Line Terminal (OLT), a Digital Subscriber Line Access Multiplexer (DSLAM), a Residential Gateway (RG), and a piece of Customer Premise Equipment (CPE).

To complete above-mentioned aim, according to another embodiment of the disclosure, a method for configuring a binding link is also provided, which is applied to the convergence device, including that: receiving an adjustment instruction which is used for adjusting a link configuration mode of multiple access links of a link binding group in a network, wherein the adjustment instruction is sent when device information about a service node in the network and/or access user information about the access link meets a preset condition; and adjusting the link configuration mode of multiple access links according to the adjustment instruction.

In an example embodiment, the preset condition includes at least one of the followings: a CPU utilization rate is greater than or equal to a threshold, a memory utilization rate is greater than or equal to a threshold, the number of users of the access link or a total user bandwidth is greater than or equal to a maximum threshold, the number of users of the access link or a total user bandwidth is less than or equal to a minimum threshold, an uplink is in fault, a downlink is in fault, and a line card is in fault; wherein, when at least one of the above conditions is met, it is determined that the link configuration mode needs to be adjusted.

In an example embodiment, the device information includes at least one of the followings: a CPU state, a memory state, an uplink state, an access link state, integrated load information, link load information, and a line card state.

In an example embodiment, the access user information includes at least one of the followings: the number of users of the access link, user authorization information, and user bandwidth information.

To complete above-mentioned aim, according to another embodiment of the disclosure, a device for configuration processing of a binding link is also provided, including a receiving component, which is configured to receive device information about a service node in a network and/or access user information about an access link, wherein the access link is a link in a link binding group between the service node and a convergence device in the network; a judging component, which is configured to judge whether the device information and/or the access user information meets a preset condition; and a sending component, which is configured to, when an output result of the judging component is that the device information and/or the access user information meets the preset condition, send an adjustment instruction, which is used for adjusting a link configuration mode to the convergence device.

In an example embodiment, the judging component is configured to judge whether the device information and/or the access user information meets at least one of the following preset conditions: a CPU utilization rate is greater than or equal to a threshold, a memory utilization rate is greater than or equal to a threshold, the number of access link users or a total user bandwidth is greater than or equal to a maximum threshold, the number of access link users or a total user bandwidth is less than or equal to a minimum threshold, an uplink is in fault, a downlink is in fault, and a line card is in fault; wherein, when at least one of the above conditions is met, it is determined that the link configuration mode needs to be adjusted.

To complete above-mentioned aim, according to another embodiment of the disclosure, a device for configuring a binding link is also provided, which is applied to the convergence device, including:
a receiving component, which is configured to receive an adjustment instruction which is used for adjusting a configuration mode of multiple access links of a link binding group in a network, wherein the adjustment instruction is sent when device information about a service node in the network and/or access user information about the access link meets a preset condition; and an adjusting component, which is configured to adjust the link configuration mode of multiple access links according to the adjustment instruction.

To complete above-mentioned aim, according to another embodiment of the disclosure, a device for service node control is also provided, including the configuration processing device.

To complete above-mentioned aim, according to another embodiment of the disclosure, a convergence device is also provided, including the configuring device.

To complete above-mentioned aim, according to another embodiment of the disclosure, a system for sharing network resource is also provided, including: the service node control device, the convergence device and the service node; wherein, the service node control device is configured to receive device information about the service node in a network and/or access user information about an access link, and when the device information and/or the access user information meets a preset condition send an adjustment instruction to the convergence device, wherein the access link is a link in a link binding group between the service node and the convergence device in the network; the convergence device is configured to receive the adjustment instruction and adjust a link configuration mode of the link binding group according to the adjustment instruction; and the service node is configured to send the device information and/or the access user information to the service node control device.

By means of the technical solutions provided in the disclosure, which include that: the device information about the service node in the network and/or the access user information about the access link is received, it is judged whether the device information and/or the access user information meets the preset condition, and when the device information and/or the access user information meets the preset condition, the adjustment instruction for adjusting the link configuration mode is sent to the convergence device, the problems in the related art that the utilization rate of network resources is low and a link failure occurs easily in a resource sharing mode are solved. The flexible allocation on service node resources is realized, and at the same time, a better risk avoidance mechanism and service continuity assurance capability are provided, so that a solution for sharing service node resources is more adapted to a development demand of a broadband network.

### Brief Description of the Drawings

The accompanying drawings described here are used for providing a deeper understanding of the disclosure, and constitute a part of the application; schematic embodiments of the disclosure and description thereof are used for illustrating the disclosure but not intended to form an improper limit to the disclosure. In the accompanying drawings:
Fig. 1 is a flowchart of a method for configuration processing of a binding link according to an embodiment of the disclosure;
Fig. 2 is a structural block diagram of a device for configuration processing of a binding link according to an embodiment of the disclosure;
Fig. 3 is a flowchart of a method for a configuring binding link according to an embodiment of the disclosure;
Fig. 4 is a structural block diagram of a device for configuring a binding link according to an embodiment of the disclosure;
Fig. 5 is a structural block diagram of a system for sharing network resources according to an embodiment of the disclosure;
Fig. 6 is a structural block diagram of a method for sharing network resources according to an embodiment of the disclosure;
Fig. 7 is a flowchart of a method for sharing network resources according to an embodiment of the disclosure;
Fig. 8 is a networking schematic diagram of a scenario where bandwidth resources are adjusted according to an example embodiment of the disclosure;
Fig. 9 is a flowchart of the scenario where bandwidth resources are adjusted according to an example embodiment of the disclosure;
Fig. 10 is a networking schematic diagram of a scenario where device failures are switched according to an example embodiment of the disclosure;
Fig. 11 is a flowchart of the scenario where device failures are switched according to an example embodiment of the disclosure;
Fig. 12 is a networking schematic diagram of the scenario where priorities are adjusted according to an example embodiment of the disclosure; and
Fig. 13 is a flowchart of the scenario where priorities are adjusted according to an example embodiment of the disclosure.

### Detailed Description

The disclosure is described below with reference to the accompanying drawings and embodiments in detail. It needs to be noted that the embodiments of the disclosure and the characteristics in the embodiments can be combined under the condition of no conflicts.

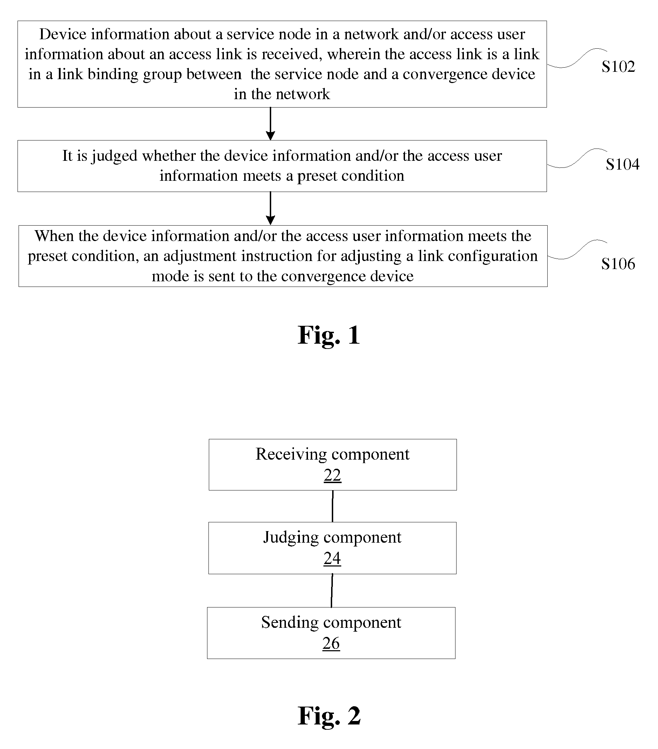

Fig. 1 is a flowchart of a method for configuration processing of a binding link according to an embodiment of the disclosure; as shown in Fig. 1, the method includes Step 102 to Step 106.

Step 102: device information about the service node in the network and/or access user information about the access link is received, wherein an access link is a link in a link binding group between a convergence device and the service node in the network;
wherein, the device information includes at least one of the followings: a CPU state, a memory state, an uplink state, an access link state, integrated load information, link load information, and a line card state; the access user information includes at least one of the followings: the number of users of the access link, user authorization information, and user bandwidth information.

Before this step, the following step is performed: a current link configuration mode from the convergence device is received, wherein , the link configuration mode includes at least one of the followings: an active-standby mode of multiple access links and a load sharing mode of multiple access links.

Step 104: it is judged whether the device information and/or the access user information meets the preset condition;

In Step 104, the preset condition may include, but are not limited to: a CPU utilization rate is greater than or equal to the threshold, a memory utilization rate is greater than or equal to the threshold, the number of access link users or a total user bandwidth is greater than or equal to the maximum threshold, the number of access link users or a total user bandwidth is less than or equal to the minimum threshold, an uplink is in fault, a downlink is in fault, and a line card is in fault.

Step 106: when the device information and/or the access user information meets the preset condition, the adjustment instruction, which is used for adjusting the link configuration mode, is sent to the convergence device.

Particularly, the adjustment instruction carries at least one of the following adjustment policies: stopping users of a specified access link from accessing, stopping new users of a specified access link from accessing, switching users of a specified access link to another access link, adjusting an active-standby or load sharing priority of a specified access link, and adjusting a limit to the number of MAC addresses of a specified access link. In the present embodiment, when the access users of the specified access link are switched to another access link, the information about the access users is sent to a service node of another access link.

In the present embodiment, the service node includes at least one of the followings: the BRAS, the BNG, the BSG, the SR, the BAS, the OFLS, and the OFS. The convergence device includes at least one of the followings: the Ethernet switch, the router, the OFLS, the OFS, the OLT, the DSLAM, the RG, and the CPE.

In the above steps, it is judged whether the device information about the service node in the network and/or the access user information about the access link meets the preset condition, and if the preset condition are met, the adjustment instruction for adjusting the link configuration mode is sent to the convergence device; by means of the technical solutions provided in the disclosure, the problems in the related art that the utilization rate of network resources is low and a link failure occurs easily in a resource sharing mode are solved. The flexible allocation on service node resources is realized, and at the same time, a better risk avoidance mechanism and service continuity assurance capability are provided, so that a solution for sharing service node resources is more adapted to the development demand of a broadband network.

A device for configuration processing of a binding link is also provided in the present embodiment, which is used for implementing the above embodiments and example implementations; these which have been illustrated will not be repeated here; the components involved in the device are illustrated below. For example, the term "component" can implement a combination of software and/or hardware with expected functions. Although the device described in the following embodiment is implemented by software preferably, the implementation through hardware or the combination of software and hardware is possible and conceived. Fig. 2 is a structural block diagram of a device for configuration processing of a binding link according to an embodiment of the disclosure. As shown in Fig. 2, the device includes:
a receiving component 22, which is configured to receive the device information about the service node in the network and/or the access user information about the access link, wherein the access link is the link in the link binding group between the convergence device and the service node in the network;
a judging component 24, which is connected with the receiving component 22 and configured to judge whether the device information and/or the access user information meets the preset condition;
wherein, the preset condition include: the CPU utilization rate is greater than or equal to the threshold, the memory utilization rate is greater than or equal to the threshold, the number of access link users or the total user bandwidth is greater than or equal to the maximum threshold, the number of access link users or the total user bandwidth is less than or equal to the minimum threshold, the uplink is in fault, the downlink is in fault, and the line card is in fault; wherein, if at least one of the above conditions is met, it is determined that the link configuration mode needs to be adjusted;
and a sending component 26, which is connected with the judging component 24 and configured to, when the output result of the judging component 24 is that the device information and/or the access user information meets the preset condition, send the adjustment instruction for adjusting the link configuration mode to the convergence device.

By means of the combined effect of the above components, the judging component 24 judges whether the device information about the service node in the network and/or the access user information about the access link which is received by the receiving component 22 meets the preset condition, and if the preset condition are met, sends the adjustment instruction for adjusting the link configuration mode to the convergence device; by adopting the technical solutions provided by the disclosure, the problems in the related art that the utilization rate of network resources is low and a link failure occurs easily in a resource sharing mode are solved. The flexible allocation on service node resources is realized, and at the same time, a better risk avoidance mechanism and service continuity assurance capability are provided, so that a solution for sharing service node resources is more adapted to the development demand of a broadband network.

In the present embodiment, a service node control device is also provided, including the device for configuration processing of a binding link. The device is configured to implement, but not limited to, functions of the receiving component 22, the judging component 24 and the sending component 26.

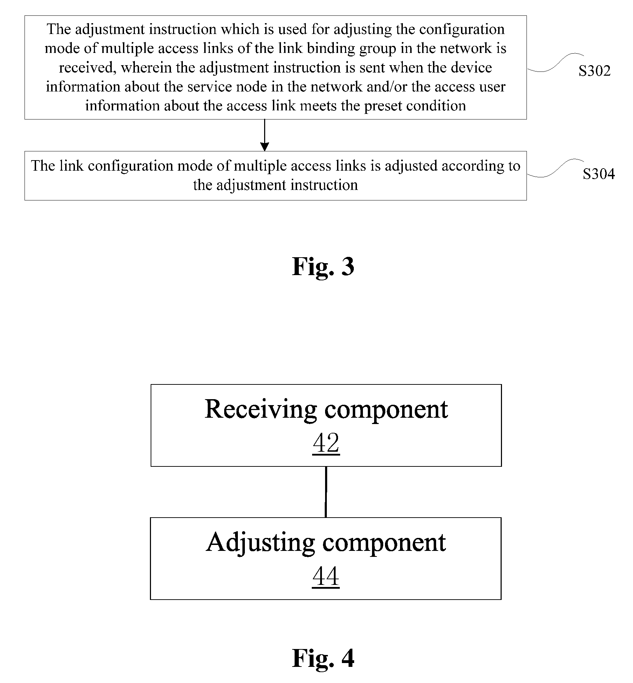

Fig. 3 is a flowchart of a method for configuring a binding link according to an embodiment of the disclosure. As shown in Fig. 3, the method includes: Step 302 to Step 304.

Step 302: the adjustment instruction which is used for adjusting the configuration mode of multiple access links of the link binding group in the network is received, wherein the adjustment instruction is sent when the device information about the service node in the network and/or the access user information about the access link meets the preset condition.

In the present embodiment, the preset condition include, but are not limited to: the CPU utilization rate is greater than or equal to the threshold, the memory utilization rate is greater than or equal to the threshold, the number of access link users or the total user bandwidth is greater than or equal to the maximum threshold, the number of access link users or the total user bandwidth is less than or equal to the minimum threshold, the uplink is in fault, the downlink is in fault, and the line card is in fault; wherein, if at least one of the above conditions is met, it is determined that the link configuration mode needs to be adjusted.

Moreover, the device information includes, but is not limited to: the CPU state, the memory state, the uplink state, the access link state, integrated load information, link load information, and the line card state; the access user information includes at least one of the followings: the number of users of the access link, the user authorization information, and the user bandwidth information.

Step 304: the link configuration mode of multiple access links is adjusted according to the adjustment instruction.

In this step, the link configuration mode includes at least one of the followings: the active-standby mode of multiple access links and the load sharing mode of multiple access links.

In the above steps, the adjustment instruction for adjusting the link configuration mode of multiple access links of the link binding group in the network is received, and the link configuration mode of multiple access links is adjusted according to the adjustment instruction. By adopting the above technical solutions provided in the disclosure, the problems in the related art that the utilization rate of network resources is low and a link failure occurs easily in a resource sharing mode are solved. The flexible allocation on service node resources is realized, and at the same time, a better risk avoidance mechanism and service continuity assurance capability are provided, so that a solution for sharing service node resources is more adapted to the development demand of a broadband network.

A device for configuring a binding link is also provided in the present embodiment, which is used for implementing the above embodiments and example implementations; these which have been illustrated will not be repeated here; the components involved in the device are illustrated below. For example, the term "component" can implement a combination of software and/or hardware with expected functions. Although the device described in the following embodiment is implemented by software preferably, the implementation through hardware or the combination of software and hardware is possible and conceived. Fig. 4 is a structural block diagram of a device for configuring a binding link according to an embodiment of the disclosure. As shown in Fig. 4, the device includes:
a receiving component 42, which is configured to receive the adjustment instruction which is used for adjusting the configuration mode of multiple access links of the link binding group in the network, wherein the adjustment instruction is sent when the device information about the service node in the network and/or the access user information about the access link meets the preset condition; and
an adjusting component 44, which is connected with the receiving component 42 and configured to adjust the configuration mode of multiple access links according to the adjustment instruction.

By means of the combined effect of the above components, the receiving component 42 receives the adjustment instruction for adjusting the link configuration mode of multiple access links of the link binding group in the network, and the adjusting component 44 adjusts the link configuration mode of multiple access links according to the adjustment instruction. By adopting the above technical solutions provided in the disclosure, the problems in the related art that the utilization rate of network resources is low and a link failure occurs easily in a resource sharing mode are solved. The flexible allocation on service node resources is realized, and at the same time, a better risk avoidance mechanism and service continuity assurance capability are provided, so that a solution for sharing service node resources is more adapted to the development demand of a broadband network.

In the present embodiment, a convergence device is also provided, including the device for configuring a binding link. The device is configured to implement, but not limited to, functions of the receiving component 42 and the adjusting component 44.

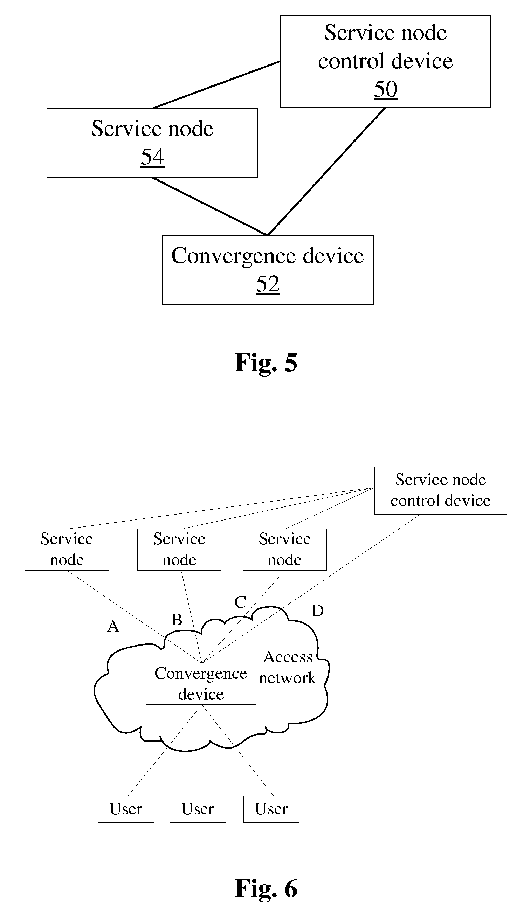

As shown in Fig. 5, in the present embodiment, a system for sharing network resources is also provided, including: a service node control device 50, a convergence device 52, and a service node 54, wherein,
the service node control device 50 is configured to receive the device information about the service node in the network and/or the access user information about the access link, and if the device information and/or the access user information meets the preset condition, send the adjustment instruction to the convergence device, wherein the access link is the link in the link binding group between the convergence device and the service node in the network;
the convergence device 52 is configured to receive the adjustment instruction and adjust the link configuration mode of the link binding group according to the adjustment instruction;
wherein, the link configuration mode includes at least one of the followings: the active-standby mode of multiple access links and the load sharing mode of multiple access links;
the service node 54 is configured to send the device information and/or the access user information to the service node control device.

By adopting the network resource sharing system of the disclosure, the problems in the related art that the utilization rate of network resources is low and a link failure occurs easily in a resource sharing mode are solved. The flexible allocation on service node resources is realized, and at the same time, a better risk avoidance mechanism and service continuity assurance capability are provided, so that a solution for sharing service node resources is more adapted to the development demand of a broadband network. The resource utilization rate between the service nodes is increased; at the same time, the network failures, such as the device goes down and the user service is offline, are avoided effectively, wherein the network failures are caused by the high CPU utilization rate and the link failures.

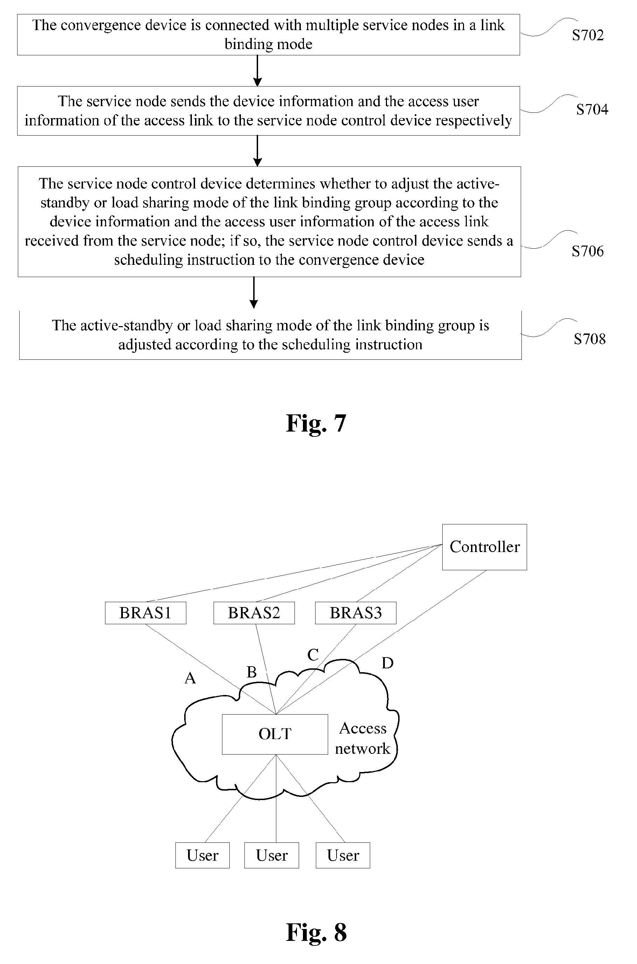

Fig. 6 is an overall structure of a network resource sharing method; Fig. 7 is an overall flowchart of a method for sharing network resources according to an embodiment of the disclosure; as shown in Fig. 7, the process can be summarized as follows:
Step 702: the convergence device is connected with multiple service nodes in a link binding mode.

Step 704: the service node respectively sends the device information and the access user information of the access link to the service node control device.

Step 706: the service node control device determines whether to adjust the active-standby or load sharing mode of the link binding group according to the device information and the access user information of the access link received from the service node; when determining to adjust the active-standby or load sharing mode of the link binding group according to the device information and the access user information of the access link, the service node control device sends a scheduling instruction to the convergence device.

Step 708: the active-standby or load sharing mode of the link binding group is adjusted according to the scheduling instruction.

For understanding the configuration processing and configuring process of the binding link in the above embodiments better, a detailed description is given below in combination with example embodiments. It needs to be noted that, the solutions of the example embodiments are not intended to form a limit to the disclosure.

### The first embodiment:

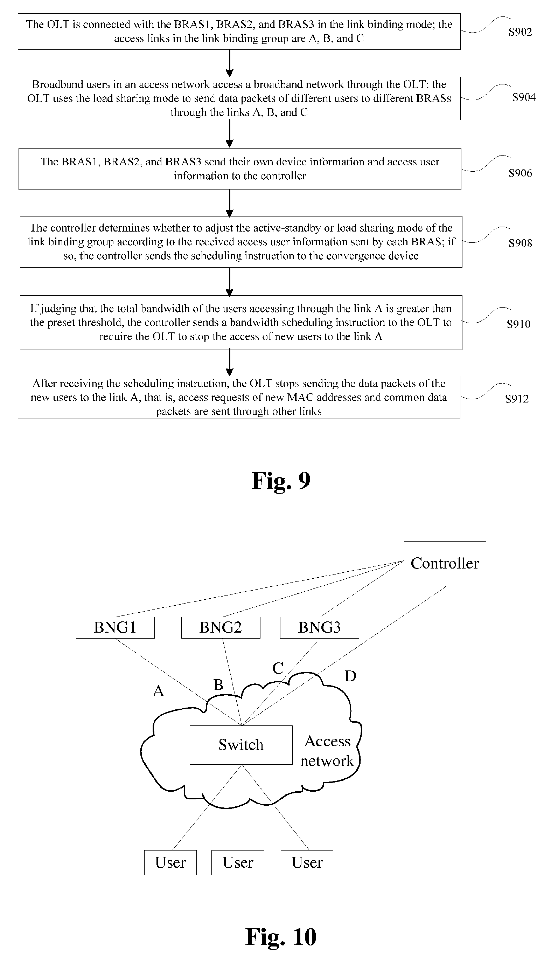

A scenario where bandwidth resources are adjusted is provided. Fig. 8 is a networking schematic diagram of a scenario where bandwidth resources are adjusted according to an example embodiment of the disclosure. In Fig. 8, the controller is equivalent to the service node control device in the above embodiments, the BRAS1, BRAS2, and BRAS3 are equivalent to the service nodes in the above embodiments, and the OLT is equivalent to a convergence node in the above embodiments; Fig. 9 is a flowchart of a scenario where bandwidth resources are adjusted according to an example embodiment of the disclosure; the flow includes the following steps.

Step 902: the OLT is connected with the BRAS1, BRAS2, and BRAS3 in the link binding mode; the access links in the link binding group are A, B, and C.

Step 904: broadband users in an access network access a broadband network through the OLT; the OLT uses the load sharing mode to send data packets of different users to different BRASs through the links A, B, and C.

Step 906: the BRAS1, BRAS2, and BRAS3 send their own device information and access user information to the controller.

Further, the access user information includes the number of users and the user bandwidth information.

Step 908: the controller determines whether to adjust the active-standby or load sharing mode of the link binding group according to the received access user information sent by each BRAS; when determining to adjust the active-standby or load sharing mode of the link binding group according to the received access user information, the controller sends the scheduling instruction to the convergence device.

Step 910: if judging that the total bandwidth of the users accessing through the link A is greater than the preset threshold, the controller sends a bandwidth scheduling instruction to the OLT to require the OLT to stop the access of new users to the link A.

Step 912: after receiving the scheduling instruction, the OLT stops sending the data packets of the new users to the link A; that is, access requests of new MAC addresses and common data packets are sent through other links.

Further, the OLT sends the information about successful adjustment to the controller.

Further, the OLT is connected with the controller through the link D; the link D is a real physical link or a routable logical path.

Further, the BRAS1, BRAS2, and BRAS3 are connected with the controller through the real physical link or the routable logical path.

### The second embodiment:

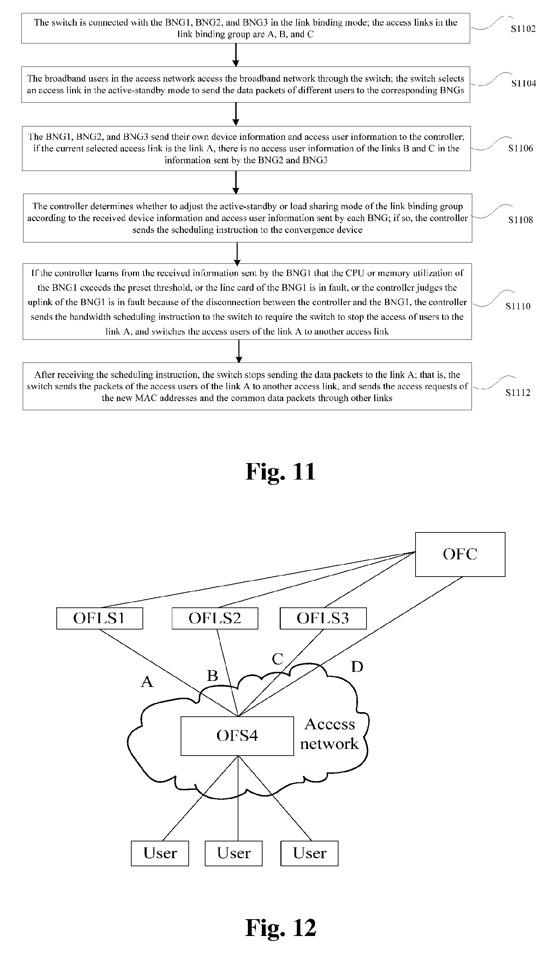

A scenario where device failures are switched is provided. Fig. 10 is a networking schematic diagram of a scenario where device failures are switched according to an example embodiment of the disclosure. In Fig. 10, the controller is equivalent to the service node control device in the above embodiments, the BNG1, BNG2, and BNG3 are equivalent to the service nodes in the above embodiments, and the switch is equivalent to the convergence node in the above embodiments. Fig. 11 is a flowchart of the scenario where device failures are switched according to an example embodiment of the disclosure; the flow includes the following steps.

Step 1102: the switch is connected with the BNG1, BNG2, and BNG3 in the link binding mode; the access links in the link binding group are A, B, and C.

Step 1104: the broadband users in the access network access the broadband network through the switch; the switch selects an access link in the active-standby mode to send the data packets of different users to the corresponding BNGs.

Step 1106: the BNG1, BNG2, and BNG3 send their own device information and access user information to the controller; if the current selected access link is the link A, there is no access user information of the links B and C in the information sent by the BNG2 and BNG3.

Further, the access user information includes the number of users and the user bandwidth information.

Step 1108: the controller determines whether to adjust the active-standby or load sharing mode of the link binding group according to the received device information and access user information sent by each BNG; when determining to adjust the active-standby or load sharing mode of the link binding group according to the received device information and access user information, the controller sends the scheduling instruction to the convergence device.

Step 1110: if the controller learns from the received information sent by the BNG1 that the CPU or memory utilization rate of the BNG1 exceeds the preset threshold, or the line card of the BNG1 is in fault, or the controller judges the uplink of the BNG1 is in fault because of the disconnection between the controller and the BNG1, the controller sends the bandwidth scheduling instruction to the switch to require the switch to stop the access of users to the link A, and switches the access users of the link A to another access link.

Further, another access link can be specified by the controller or selected by the switch.

Step 1112: after receiving the scheduling instruction, the switch stops sending the data packets to the link A; that is, the switch sends the packets of the access users of the link A to another access link, and sends the access requests of the new MAC addresses and the common data packets through other links.

Further, the switch sends the information about successful adjustment to the controller, wherein the information carriers information about another access link.

Further, the controller sends the user information of the access link A received from the BNG1 to the service node connected with the other access link.

Further, the switch is connected with the controller through the link D; the link D is the real physical link or the routable logical path.

Further, the BNG1, BNG2, and BNG3 are connected with the controller through the real physical link or the routable logical path.

### The third embodiment:

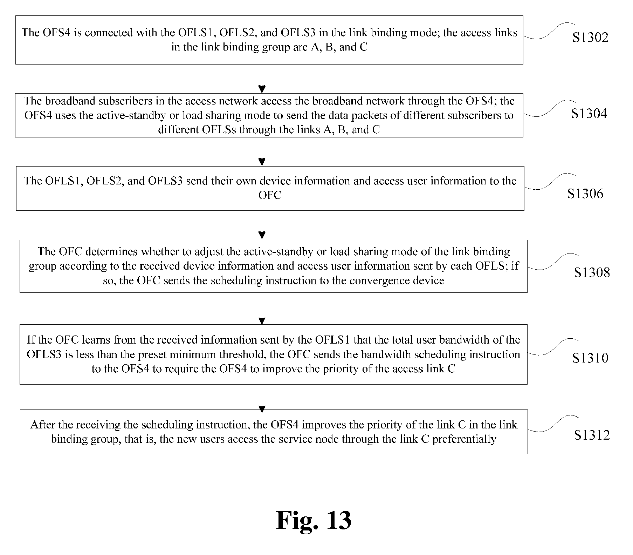

A scenario where priorities are adjusted is provided. Fig. 12 is a networking schematic diagram of a scenario where priorities are adjusted according to an exmaple embodiment of the disclosure. In Fig. 12, an OpenFlow Controller (OFC) is equivalent to the service node control device in the above embodiments, the OFLS1, OFLS2, and OFLS3 are equivalent to the service nodes in the above embodiments, and the OFS4 is equivalent to the convergence node in the above embodiments. Fig. 13 is a flowchart of a scenario where the priorities are adjusted according to an example embodiment of the disclosure; the flow includes the following steps.

Step 1302: the OFS4 is connected with the OFLS1, OFLS2, and OFLS3 in the link binding mode; the access links in the link binding group are A, B, and C.

Step 1304: the broadband subscribers in the access network access the broadband network through the OFS4; the OFS4 uses the active-standby or load sharing mode to send the data packets of different subscribers to different OFLSs through the links A, B, and C.

Step 1306: the OFLS1, OFLS2, and OFLS3 send their own device information and access user information to the OFC.

Further, the access user information includes the number of users and the user bandwidth information.

Step 1308: the OFC determines whether to adjust the active-standby or load sharing mode of the link binding group according to the received device information and access user information sent by each OFLS; when determining to adjust the active-standby or load sharing mode of the link binding group according to the received device information and access user information, the OFC sends the scheduling instruction to the convergence device.

Step 1310: if the OFC learns from the received information sent by the OFLS1 that the total user bandwidth of the OFLS3 is less than the preset minimum threshold, the OFC sends the bandwidth scheduling instruction to the OFS4 to require the OFS4 to improve the priority of the access link C.

Step 1312: after the receiving the scheduling instruction, the OFS4 improves the priority of the link C in the link binding group, that is, the new users access the service node through the link C preferentially.

Further, the OFS4 sends the information about successful adjustment to the OFC, wherein the information carriers the information about another access link.

Further, the OFS4 is connected with the OFC through the link D; the link D is the real physical link or the routable logical path.

Further, the OFLS1, OFLS2, and OFLS3 are connected with the OFC through the real physical link or the routable logical path.

To sum up, the above technical solutions provided in the disclosure achieve the following effects: the problems in the related art that the utilization rate of network resources is low and a link failure occurs easily in a resource sharing mode are solved; the flexible allocation on service node resources is realized, and at the same time, a better risk avoidance mechanism and service continuity assurance capability are provided, so that a solution for sharing service node resources is more adapted to the development demand of a broadband network; and the resource utilization rate between the service nodes is increased; at the same time, the network failures, such as the device goes down and the user service is offline, are avoided effectively, wherein the network failures are caused by the high CPU utilization rate and the link failures.

Obviously, those skilled in the art should appreciate that the above components and steps of the disclosure can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device; and in some situations, the presented or described steps can be executed in an order different from that described here; or they are made into integrated circuit components, respectively; or multiple components and steps of them are made into a single integrated circuit component to realize. In this way, the disclosure is not limited to any particular combination of hardware and software.

The above are only the example embodiments of the disclosure and not intended to limit the disclosure; for those skilled in the art, the disclosure may have various modifications and changes. Any modifications, equivalent replacements, improvements and the like within the spirit and principle of the disclosure shall fall within the scope of the claims of the disclosure.

### Industrial Applicability

The technical solutions provided in the disclosure can be applied to the configuration processing of a binding link. By means of the technical solutions which include that: the device information about the service node in the network and/or the access user information about the access link is received, it is judged whether the device information and/or the access user information meets the preset condition, and if the preset condition are met, the adjustment instruction for adjusting the link configuration mode is sent to the convergence device, the problems in the related art that the utilization rate of network resources is low and a link failure occurs easily in a resource sharing mode are solved. The flexible allocation on service node resources is realized, and at the same time, a better risk avoidance mechanism and service continuity assurance capability are provided, so that a solution for sharing service node resources is more adapted to the development demand of the broadband network.

## Claims

1. A method for configuration processing of a binding link, comprising:
receiving device information about a service node in a network and/or access user information about an access link, wherein the access link is a link in a link binding group between the service node and a convergence device in the network;
judging whether the device information and/or the access user information meets a preset condition; and
when the device information and/or the access user information meets the preset condition, sending an adjustment instruction, which is used for adjusting a link configuration mode, to the convergence device.

2. The method as claimed in claim 1, wherein judging whether the device information and/or the access user information meets the preset condition comprises:
judging whether the device information and/or the access user information meets at least one of the following conditions: a CPU utilization rate is greater than or equal to a threshold, a memory utilization rate is greater than or equal to a threshold, the number of users of the access link or a total user bandwidth is greater than or equal to a maximum threshold, the number of users of the access link or a total user bandwidth is less than or equal to a minimum threshold, an uplink is in fault, a downlink is in fault, and a line card is in fault; wherein, when at least one of the above conditions is met, it is determined that the link configuration mode needs to be adjusted.

3. The method as claimed in claim 1, wherein the device information comprises at least one of the followings:
a CPU state, a memory state, an uplink state, an access link state, integrated load information, link load information, and a line card state.

4. The method as claimed in claim 1, wherein the access user information comprises at least one of the followings:
the number of users of the access link, user authorization information, and user bandwidth information.

5. The method as claimed in claim 1, wherein the adjustment instruction carries at least one of the following adjustment policies:
stopping users of a specified access link from accessing, stopping new users of a specified access link from accessing, switching access users of a specified access link to another access link, adjusting an active-standby or load sharing priority of a specified access link, and adjusting a limit to the number of Media Access Control (MAC) addresses of a specified access link.

6. The method as claimed in claim 5, further comprising:
when switching the access users of the specified access link to the other access link, sending user information about the access users to a service node of the other access link.

7. The method as claimed in claim 1, wherein before receiving the device information about the service node in the network and/or the access user information about the access link, the method further comprises:
receiving a current link configuration mode from the convergence device.

8. The method as claimed in any one of claims 1 to 7, wherein the link configuration mode comprises at least one of the followings:
an active-standby mode of multiple access links and a load sharing mode of multiple access links.

9. The method as claimed in any one of claims 1 to 7, wherein the service node comprises at least one of the followings:
a Broadband Remote Access Server (BRAS), a Broadband Network Gateway (BNG), a Broadband Service Gateway (BSG), a Service Router (SR), a Broadband Access Server (BAS), an OpenFlow Logical Switch (OFLS), and an OpenFlow Switch (OFS).

10. The method as claimed in any one of claims 1 to 7, wherein the convergence device comprises at least one of the followings:
an Ethernet switch, a router, an OFLS, an OFS, an Optical Line Terminal (OLT), a Digital Subscriber Line Access Multiplexer (DSLAM), a Residential Gateway (RG), and a piece of Customer Premise Equipment (CPE).

11. A method for configuring a binding link, which is applied to a convergence device, comprising:
receiving an adjustment instruction which is used for adjusting a link configuration mode of multiple access links of a link binding group in a network, wherein the adjustment instruction is sent when device information about a service node in the network and/or access user information about the access link meets a preset condition; and
adjusting the link configuration mode of multiple access links according to the adjustment instruction.

12. The method as claimed in claim 11, wherein the preset condition comprises at least one of the followings:
a CPU utilization rate is greater than or equal to a threshold, a memory utilization rate is greater than or equal to a threshold, the number of users of the access link or a total user bandwidth is greater than or equal to a maximum threshold, the number of users of the access link or a total user bandwidth is less than or equal to a minimum threshold, an uplink is in fault, a downlink is in fault, and a line card is in fault; wherein, when at least one of the above conditions is met, it is determined that the link configuration mode needs to be adjusted.

13. The method as claimed in claim 11, wherein the device information comprises at least one of the followings:
a CPU state, a memory state, an uplink state, an access link state, integrated load information, link load information, and a line card state.

14. The method as claimed in claim 11, wherein the access user information comprises at least one of the followings:
the number of users of the access link, user authorization information, and user bandwidth information.

15. A device for configuration processing of a binding link, comprising:
a receiving component, which is configured to receive device information about a service node in a network and/or access user information about an access link, wherein the access link is a link in a link binding group between the service node and a convergence device in the network;
a judging component, which is configured to judge whether the device information and/or the access user information meets a preset condition; and
a sending component, which is configured to, when an output result of the judging component is that the device information and/or the access user information meets the preset condition, send an adjustment instruction, which is used for adjusting a link configuration mode to the convergence device.

16. The device as claimed in claim 15, wherein the judging component is configured to judge whether the device information and/or the access user information meets at least one of the following preset conditions:
a CPU utilization rate is greater than or equal to a threshold, a memory utilization rate is greater than or equal to a threshold, the number of access link users or a total user bandwidth is greater than or equal to a maximum threshold, the number of access link users or a total user bandwidth is less than or equal to a minimum threshold, an uplink is in fault, a downlink is in fault, and a line card is in fault; wherein, when at least one of the above conditions is met, it is determined that the link configuration mode needs to be adjusted.

17. A device for configuring a binding link, which is applied to a convergence device, comprising:
a receiving component, which is configured to receive an adjustment instruction which is used for adjusting a configuration mode of multiple access links of a link binding group in a network, wherein the adjustment instruction is sent when device information about a service node in the network and/or access user information about the access link meets a preset condition; and
an adjusting component, which is configured to adjust the link configuration mode of multiple access links according to the adjustment instruction.

18. A service node control device, comprising a device as claimed in claim 15 or 16.

19. A convergence device, comprising a device as claimed in claim 17.

20. A system for sharing network resources, comprising: a service node control device, a convergence device, and a service node; wherein,
the service node control device is configured to receive device information about the service node in a network and/or access user information about an access link, and when the device information and/or the access user information meets a preset condition send an adjustment instruction to the convergence device, wherein the access link is a link in a link binding group between the service node and the convergence device in the network;
the convergence device is configured to receive the adjustment instruction and adjust a link configuration mode of the link binding group according to the adjustment instruction; and
the service node is configured to send the device information and/or the access user information to the service node control device.
